## Europäisches Patentamt
## European Patent Office
## Office européen des brevets

(19)

(11) Veröffentlichungsnummer: **0 118 944**
**B1**

(12) # EUROPÄISCHE PATENTSCHRIFT

(45) Veröffentlichungstag der Patentschrift:
**10.06.87**

(51) Int. Cl.⁴: **B 60 R 13/04**

(21) Anmeldenummer: **84200241.2**

(22) Anmeldetag: **21.02.84**

(54) Blasformkörper aus Kunststoff.

(30) Priorität: **10.03.83 DE 3308483**

(43) Veröffentlichungstag der Anmeldung:
**19.09.84 Patentblatt 84/38**

(45) Bekanntmachung des Hinweises auf die Patenterteilung:
**10.06.87 Patentblatt 87/24**

(84) Benannte Vertragsstaaten:
**FR GB IT NL SE**

(56) Entgegenhaltungen:
**EP-A-0 038 955**
**DE-B-2 536 766**
**FR-A-2 428 546**
**US-A-2 634 467**
**US-A-3 982 780**

(73) Patentinhaber: **REHAU AG + Co, Rheniumhaus, D-8673 Rehau (DE)**

(72) Erfinder: **Weinberg, Ekkehard, Dr., Jean- Paul-Strasse 4, D-8671 Schönwald (DE)**
Erfinder: **Hameister, Rolf, Bühlstrasse 26, D-8670 Hof/Saale- Leimitz (DE)**

EP 0 118 944 B1

## Beschreibung

Die Erfindung betrifft einen Blasformkörper aus Kunststoff für Zier- oder Schutzleisten, Spoiler, Stoßfanger und derglelchen, insbesondere für den Automobilbau.

Es ist bekannt, Blasformkörper für dieses Anwendungsgebiet zu verwenden. Aus der Deutsche Auslegeschift DE-B-2 536 766 ist ein leistenförmiger Hohlkörper bekannt, der als in sich geschlossener Blasformkörper gebildet ist. Derartige Blasformkörper konne als Zier- und Schutzleisten verschiedensten Verwendungszwecken zugeführt werden.

Bei ihrem Einsatz im Automobilbau wurde jedoch als nachteilig erkannt, daß ihre Biegefestigkeit und Torsionssteifigkeit aufgrund ihrer Ausbildung als geschlossener Blasformkörper viel zu hoch ist. Diese Steifigkeit kann bereits bei der Anbringung mit mechanischen Verbindungsmitteln oder im Klebeverfahre zu Schwierigkeiten führen. Die Belastungen beim Betrieb des Automobils werden aufgrund der hohen Steifigkeit und der damit einhergehenden hohen Biegefestigkeit so groß daß derartige Leisten sich nach relativ kurzer Zeit von der Karosserie abheben bzw. bei der Verwendung ala Klebeleisten sogar abfallen.

Aus der Deutschen Offenlegungsschrift DE-A-3 016 652 ist eine weitere Ausführungsform eine geschlossenen Blasformkörpers bekannt geworden, welcher zum Ausgleich der temperaturabhängig unterschiedlichen Dehnungen bzw. Zusammenziehungen sickenartige Vertiefungen in den Oberflächen aufweist.

Nach den Angaben dieser Veroffentlichung dienen die sichenartigen Vertiefungen sogar zur Erhöhung der Biegesteifigkeit und gleichzeitig zur Erhöhung der energieverzehrenden Wirkung solcher Leisten. Die Nachteile des bekannten Standes der Technik werde dadurch also nicht beseitigt.

Hier setzt die Erfindung ein, die es sich zur auf gabe gestellt hat, derartige Blasteile für die Anwendung auch im Automobilbau einerseits mit einer möglichst hohen Flexibilität und andererseits mit einer entsprechenden Steifigkeit für die Energieaufnahme bei Stoßbeanspruchungen auszustatten. Erfindungsgemäß wird diese Aufgabe dadurch gelöst, daß der Blasformkörper wenigstens an der Anlageseite zum Befestigungsuntergrund definierte Öffnungen aufweist, welche die Blasformkörperwand durchdringen, untereinander durch stegformige Wandteile der Blasformkörperwand getrennt sind und mit ihrem Flächenanteil zur gesamten Flache der teilgeöffneten Blasformkörper wird in einem Verhaltnis zwischen 10 % und 70 %, verzugsweise zwischen 15 % und 40 % stehen.

Überraschenderweise hat sich gezeigt, daß die sich eigentlich widersprechenden Anforderungen der Aufgabenstellung, nämlich einerseits hohe Flexibilitat und andererseits hoher Eindringwiderstand einer solchen Leiste durch die Ausbildung des Blasformkörpers als definiert offenes Blasteil erfüllt werden konnte.

Die erfindungsgemäß Öffnungen befinden sich in der Regel auf der Unterseite des Blasformkorpers und können vorteilhaft aus runden, ovalen oder eckigen Ausnehmungen der Blasformkörperwand bestehen.

Zwichen diesen Öffnungen bleiben stegformige Teile der Blasformkörperwand erhalten, die im Verhältnis zu den Öffnungen Ausdehnungsbereiche aufweisen können, mit denen die Biegefestigkeit und die Torsionssteifigkeit der Leiste beeinflußt werden können. Gegenüber einer bekannten, zu 100 % geschlossenen Blasformkörperleiste können die nach der Erfindung einzubringenden definierten Öffnungen zwischen 10 % und 70 % der Unterseite des Blasformkörpers betragen, und vorzugsweise bewegt sich dieser Flächenanteil der Öffnungen im Verhältnis zur gesamten Fläche der Unterseite des Blasformkörpers zwischen 15 % und 40 %.

Die erfindungsgemäßen Öffnungen können auch aus einer Kombination zwischen runden, ovalen oder eckigen Ausnehmungen der Blasformkörperwand bestehen.

Die Vorteile des erfindungsgemäß als definiert offenes Blasteil zu bezeichnenden Blasformkörpers liegen darin, daß über die Öffnungen an der Rückseite des Blasformkörpers in Kombination mit den verbleibenden Stegen der Blasformkörperwand eine Beeinflussung der Biegefestigkeit und der Torsionssteifigkeit herbeigeführt werden kann, die die Forderung der Energieaufnahme bei Stofßbeanspruchung annähernd unbeeinflußt läßt. Diese an sich überraschende Kombination von Eigenschaften ist in der nachstehenden Tabelle 1 niedergelegt, wobei ein Blasteil mit folgenden Abmessungen zugrunde gelegt wurden

| Länge | 1000 mm |
|---|---|
| Breite | 100 mm |
| Höhe | 20 mm |
| Wanddicke | 3 mm |

Die Zahlenangabe der Tabelle sind in Prozent, bezogen auf das geschlossene Blasteil, angegeben.

**Tabelle 1**

Blasformkörper

| Abmessung in mm | Anzahl der Löcher | 4 | 6 | 8 | 10 | 12 | 14 | 16 | 18 |
|---|---|---|---|---|---|---|---|---|---|
| | Kraftabnahme des blaskörpers in % bezogen auf geschl. blasteil | untere geöffnete Bodenfläche in % | | | | | | | |
| | | 10 | 15 | 20 | 25 | 30 | 35 | 40 | 45 |
| Höhe = 20 mm Breite = 100 mm Länge = 1000 mm | Biegefestigkeit | 15 | 22,5 | 30 | 37,5 | 45 | 52,5 | 60 | 67,5 |
| Länge = 1000 mm | Torsionssteifigkeit | 30 | 45 | 60 | 75 | 83 | 87 | 90 | 91 |
| Wand- dicke = 3 mm | Eindrückwiderstand | 1 | 1,5 | 2 | 2,5 | 3 | 3,5 | 4 | 4,5 |

Aus den Angaben der Tabelle läßt sich entnehmen, wie die Biegefestigeit, die Torsionssteifigkeit und der Eindruckwiderstand in Abhängigkeit stehen von der Anzahl der in die Unterseite der Blasleiste eingebrachten Öffnungen. Die Anzahl der Öffnungen ist dann bezogen auf den prozentualen Flächenanteil der Öffnungen im Verhaltnis zur gesamten Fläche der Unterseite des Blasformkörpers. Es ergibt sich also im Beispielsfall, daß bei sechs eingebrachten Öffnungen die Bodenfläche zu 15% geöffnet ist. Daraus ergibt sich eine Abnahme der Biegefestigkeit urn 22,5 % und eine Abnahme der Torsionssteifigkeit um 45 % - jeweils bezogen auf das geschlossene Blasteil entsprechender Abmessungen. Überraschenderweise verringert sich der Eindruckwiderstand lediglich um 1,5 %. Ist 40 % der Bodenfläche des Blasformkörpers erfindungsgemäß geöffnet worden, sind also im Beispielsfall 16 Öffnungen eingebracht worden, nimmt nach den Werten der Tabelle 1 die Biegefestigkeit um 60 % und die Torsionssteifigkeit um 90 % ab. Der Eindruckwiderstand verringert sich bei diesem Beispiel lediglich um 4 %.

Die eigentlich überraschende Erkenntnis aus der Erfindung ist die Tatsache, daß die Biegefestigkeit und die Torsionssteifigkeit mit zunehmendem Öffnungsgrad der Leistenunterseite extrem abnehmen, während der Eindruckwiderstand als lediglich geringfügig abnehmend, ja fast als konstant bleibend bezeichnet werden kann. Dies bedeutet für den praktischen Anwendungsfall, daß eine erfindungsgemäß mit definierten Öffnungen versehene Blasleiste aufgrund der verringerten Biegefestigkeit und Torsionssteifigkeit Unebenheiten der Basiswand, z. B. der Karosseriewand eines Automobils, ohne Schwierigkeiten angeglichen werden kann. Ein Abheben bzw. Abfallen einer derart ausgestatteren Blasleiste ist nicht zu befürchten, da die Biegefestigkeit und die Torsionssteifigkeit durch Variationen der Öffnungsanzahl bzw. Öffnungsgröße derart eingestellt werden kann, daß samtliche vorstellbaren Belastungen durch Fahrbetrieb, in Waschanlagen, bei Wärmeausdehnungen usw. die Blasleiste in ihrem festen Sitz nicht beeinträchtigen können. Dies gilt sowohl für mechanisch am Grundkörper, z. B. an der Autokarosserie verankerte Blasleisten als auch für solche, die an diesen Unterlagen verklebt sind.

Bei mechanisch verankerten Leisten ist diese Tatsache besonders deswegen wichtig, weil hier die Gefahr besteht, daß aufgrund der Torsionsstelfigkeit eines geschlossenen Blastformkörpers die Befestigungen bei extremem Fahr betrieß, z. B. schlechte Wegstrecken oder Überfahren von Hindernissen, aus ihrer Verankerung herausgerissen und damit die Leiste von ihrem Sitz abgelöst wird.

Bei der Verwendung von sogenannten Klebeleisten, bei denen auf der Ruckseite des geschlossenen Blasformkörpers ein Klebeband, beispielsweise auf der Basis Neoprene/Acrylat, auf gebracht wurde, konnten ähnliche Ablösungserscheinungen beobachtet werden. So wurde bei einer Blasleiste der Abmessungen

| | |
|---|---|
| Länge | 1000 mm |
| Breite | 100 mm |
| Höhe | 20 mm |
| Wanddicke | 3 mm |

Nach ca. 7.000 bis 10.000 Lastwechseln Ablösungserscheinungen vom Untergrund beobachtet. Diese Lastwechselzahl entspricht einem Fahrbetrieb je nach Fahrbedingungen von 0,5 bis 2 Jahren, entsprechend einer km-Leistung zwischen 10.000 und 30.000.

Diese Nachteile werden durch eine erfindungsgemäß ausgestattete Blasleiste beseitigt.

In Tabelle 2 sind die Werte der Tabelle 1 mit einer Restkraft des Blasformkörpers in N, bezogen auf das geschlossene Blasteil, angegeben. Bei den beiden gewählten Beispielen 15 % und 40% der geöffneten Bodenflache beträgt beim ersten Beispiel die Biegefestigkeit noch 45,6 N, während die Torsionssteifigkeit noch 35 N beträgt. Beim zweiten Beispiel mit 40 % Bodenöffnung wurde die Biegefestigkeit noch mit 23,6 N und die Torsionssteifigkeit noch mit 6,5 N ermittelt. Dem gegenüber betrug der Eindruckwiderstand bei 15 %iger Öffnung 33,82 N und bei 40 %iger Öffnung 32,95 N.

**Tabelle 2**

Blasformkörper

| Abmessung in mm | Anzahl der Löcher | 4 | 6 | 8 | 10 | 12 | 14 | 16 | 18 |
|---|---|---|---|---|---|---|---|---|---|
| | Restkraft des Blaskörpers in N bezogen auf geschl. Blasteil | untere geöffnete Bodenfläche in % | | | | | | | |
| | | 10 | 15 | 20 | 25 | 30 | 35 | 40 | 45 |
| Höhe = 20 mm Breite = 100 mm | Biegefestigkeit | 50 | 45,6 | 41,2 | 36,8 | 32,4 | 28 | 23,6 | 19,2 |
| Länge = 1000 mm | Torsionssteifigkeit | 45 | 35 | 25 | 16 | 10,8 | 8,3 | 6,5 | 5,1 |
| Wanddicke = ca. 3 mm | Eindruckwiderstand | 34 | 33,82 | 33,64 | 33,47 | 33,30 | 33,13 | 32,96 | 32,79 |

Auch daraus ergibt sich der extreme Abfall der Biegefestigkeit und der Torsionssteifigkeit sowie der extrem geringe Abfall des Eindruckwiderstandes.

In der Zeichnung sind Ausführungsbeispiele des erfindungsgemäßen Blasformkörpers dargestellt; es zeigt:

Figur 1 die Unterseite eines Blasformkörpers mit rechteckigen Öffnungen,

Figur 2 die Unterseite eines Blasformkörpers mit runden Öffnungen,

Figur 3 die Unterseite eines Blasformkörpers mit T-förmigen Öffnungen,

Figur 4 die Unterseite eines Blasformkörpers mit Mischformen der Öffnungen,

Figur 5 ein Diagramm zum Festigkeitsverhalten.

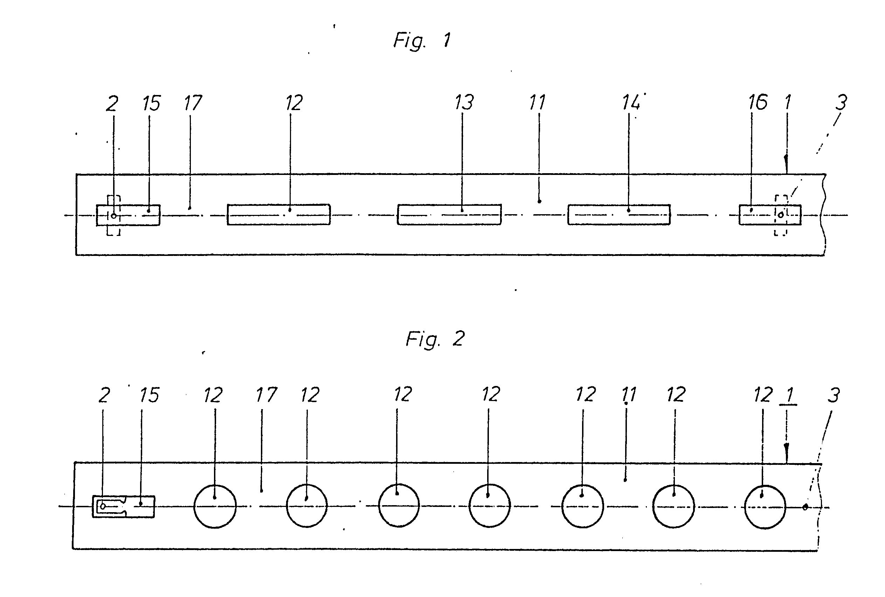

In Figur 1 ist die Unterseite 11 des Blasformkörpers 1 mit drei mittleren Öffnungen 12, 13, 14 zu erkennen. Die Öffnungen 12, 13, 14 durchdringen die Unterseite 11 der Blasformkörpers 1. In den äußeren Randbereichen des Blasformkörpers 1 sind Befestigungsöffnungen 15, 16 eingebracht, in denen mechanisch Befestigungsmittel 2, 3 angedeutet sind. Diese Befestigungsöffnungen 15, 16 dienen ebenfalls in Verbindung mit den Öffnungen 12, 13, 14 zur Verminderung der Biegefestigkeit und der Torsionssteifigkeit im Sinne der Erfindung.

In Figur 2 sind in die Unterseite 11 der Blasfleiste 1 kreisförmige Öffnungen 12 eingebracht, wobei in der gezeigten Darstellung sieben solcher Öffnungen vorhanden sind. Die Befestigungsöffnung 15 ist in diesem Beispiel ebenfalls als längliche Öffnung mit den, mechanischen Befestigungsmittel 2 ausgestaltet. Durch diese Befestigung können - wie bei der in Figur 1 dargestellten - Langsausdehnungen der Leiste durch Temperaturschwankungen usw. ausgeglichen werden.

Das Befestigungsmittel 3 im gegenüberliegenden Endbereich der Blasleiste 1 ist als nicht flexible Schrauböffnung in der Unterseite der Blasleiste 1 gezeigt.

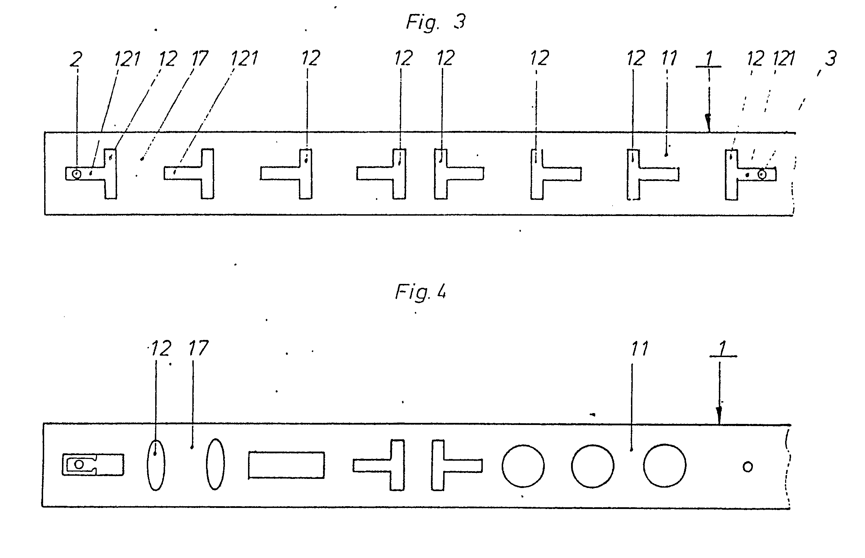

In Figur 3 ist die Unterseite 11 der Blasleiste 1 mit T-förmigen Öffnungen 12 versehen, wobei acht solcher Öffnungen über die Unterseite 11 gesehen eingebracht sind. Vier dieser Öffnungen 12 zeigen mit ihrem tragenden T-Schenkel 121 nach links und vier nach rechts. Selbstverstandlich können hier alle den denkbaren Richtungsvariationen eingehalten werden. In den tragenden T-Schenkeln 121 der beiden äußeren Öffnungen 12 sind mechanische Befestigungsmittel 2, 3 angedeutet.

Figur 4 zeigt schließlich die Unterseite 11 einer Blasleiste 1 mit unterschiedlich gestalteten Öffnungen 12. Die Befestigungsanordnung dieser Darstellung entspricht der zu Figur 2 beschriebenen.

Sämtliche gezeigten Beispiele können auch als reine Klebeleisten oder mit einer Kombination der Befestigunfsarten mechanisch - kleben ausgestartet sein.

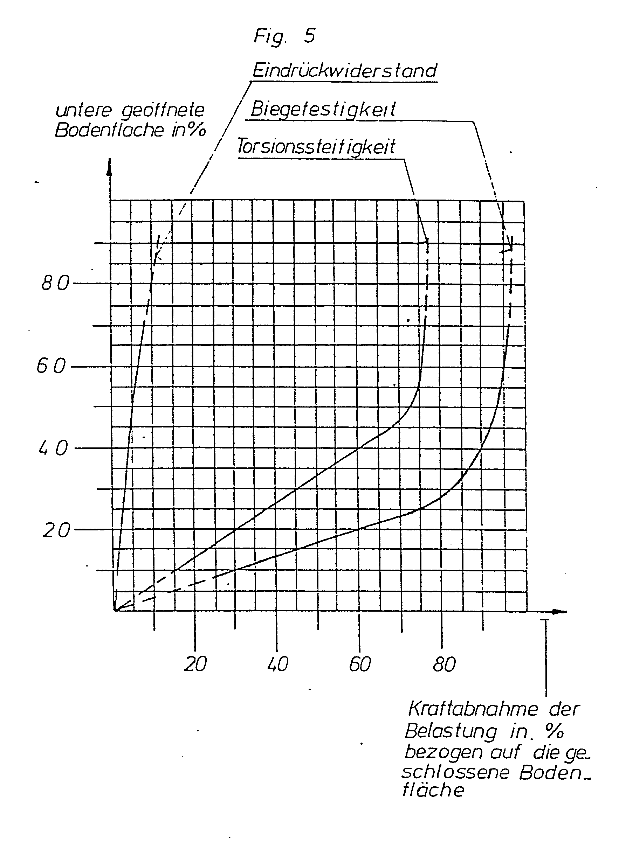

In Figur 5 ist noch das Festigkeitsverhalten der erfindungsgemäß ausgestatteten Blasleiste in Form eines Diagramms dargestellt. Nach oben gerichtet ist der geöffnete Bodenfläche der Blasleiste in Prozent aufgetragen, während nach rechts gerichtet die Kraftabnahme der Belastung in Prozent, bezogen auf die geschlossene Bodenfläche, ausgedrückt ist. Durch diese Darstellung lassen sich die Aussagen der Tabellen 1 und 2 eindeutig bestätigen.

**Patentansprüche**

1. Blasformkörper aus Kunststoff für Zier- und Schutzleisten, Spoiler, Stoßfänger und dergleichen, insbesondere für den Automobilbau, dadurch gekennzeichnet, daß der Blasformkörper (1) wenigstens an der Anlageseite (11) zum Befestigungsuntergrund definierte Öffnungen (12, 13, 14, 15, 16) aufweist, welche die Blasformkörperwand durchdringen, untereinander durch stegförmige Wandteile (17) der Blasformkörperwand getrennt sind und mit ihrem Flächenanteil zur gesamten Fläche der teilgeöffneten Blasformkörperwand in einem Verhältnis zwischen 10% und 70% vorzugweise zwischen 15% und 40%, stehen.

2. Blasformkörper nach Anspruch 1, dadurch gekennzeichnet, daß die Öffnungen (12, 13, 14, 15, 16) aus runden, ovalen oder eckigen Ausnehmungen der Blasformkörperwand bestehen.

3. Blasformkörper nach Anspruch 2, dadurch gekennzeichnet, daß die Öffnungen (12, 13, 14, 15, 16) aus Kombinationen zwischen runden, ovalen oder eckigen Ausnehmungen der Blasformkörper bestehen.

**Claims**

1. A blow moulding made of plastic material, for trim strips and protective strips, spoilers, bumpers and the like, in particular for motor vehicles, in which the blow moulding (1) has at least at its side in contact with the fixing surface (11) defined openings (12, 13, 14, 15, 16) through the wall of the blow moulding which are separated from each other by webs (17) constituting parts of the wall of the blow moulding and whose total area forms between 10 and 70%, preferably between 15 and 40% of the entire surface area of the partly open wall of the blow moulding.

2. A blow moulding according to Claim 1, in which the openings (12, 13, 14, 15, 16) are round, oval or angular apertures in the wall of the blow moulding.

3. A blow moulding according to Claim 2, in which the openings (12, 13, 14, 15, 16) are in the form of combinations of round, oval or angular apertures in the blow mouldings.

**Revendications**

1. Pièce moulée obtenue par soufflage, en matière plastique, pour enjoliveuses et tringles de garde, déporteurs, pare-chocs et autres semblables, notamment pour la construction automobile, caractérisée par le fait que la pièce moulée obtenue par soufflage (1) présente, pour le moins à la face inférieure (11) donnant sur le fond de fixation, des orifices définis (12, 13, 14, 15, 16) qui traversent la paroi de la pièce moulée, sont séparés entre eux par des parties en forme de nervures (17) de la paroi de pièce moulée et dont la quote-part de superficie par rapport à la surface totale de la paroi partiellement ouverte de la pièce moulée obtenue par soufflage se trouve dans un rapport entre 10% et 70%, de préférence entre 15% et 40%.

2. Pièce moulée obtenue par soufflage suivant revendication 1, caractérisée par le fait que les orifices (12, 13, 14, 15, 16) consistent en creux ronds, ovales ou angulaires dans la paroi de la pièce moulée obtenue par soufflage.

3. Pièce moulée obtenue par soufflage suivant revendication 2, caractérisée par le fait que les orifices (12, 13, 14, 15, 16) consistent en combinaisons de creux ronds, ovales ou angulaires dans la pièce moulée obtenue par soufflage.

Fig. 1

Fig. 2

Fig. 3

Fig. 4

Fig. 5

_Eindrückwiderstand_

_untere geöffnete_
_Bodenfläche in%_

_Biegefestigkeit_

_Torsionssteifigkeit_

8 0

6 0

4 0

2 0

20    40    60    80

_Kraftabnahme der_
_Belastung in. %_
_bezogen auf die ge_
_schlossene Boden_
_fläche_